# EUROPÄISCHE PATENTSCHRIFT

(11) **EP 3 715 286 B1**
(45) Veröffentlichungstag und Bekanntmachung des Hinweises auf die Patenterteilung: **06.10.2021**
(21) Anmeldenummer: 19165800.4
(22) Anmeldetag: 28.03.2019
(51) Int. Cl.: B65G 15/08

(54) **VERSTELLBARER EINKLEMMSCHUTZ FÜR GURTFÖRDERER**
ADJUSTABLE ANTI-JAMMING PROTECTION FOR BELT CONVEYOR
PROTECTION AJUSTABLE CONTRE LE COINCEMENT D'UNE BANDE TRANSPORTEUSE

(43) Veröffentlichungstag der Anmeldung: 30.09.2020
(73) Patentinhaber: BEUMER Group GmbH & Co. KG, 59269 Beckum (DE)
(72) Erfinder: Borghoff, Nils, 59269 Beckum (DE)
(74) Vertreter: Philipp, Matthias

(56) Entgegenhaltungen:
- EP-A1- 3 409 620
- US-A- 3 147 852

## Beschreibung

Die vorliegende Erfindung betrifft eine Stützstation zum Abstützen eines Fördergurtes einer Gurtförderanlage, eine solche Gurtförderanlage mit mindestens einer derartigen Stützstation sowie ein Verfahren zum Einstellen eines Abstands zwischen einem Fördergurt und einem Einklemmschutz. Bei Gurtförderanlagen sind Einzugsstellen zwischen dem laufenden Gurt und den rotierenden Tragrollen zu vermeiden bzw. möglichst ungefährlich einzustellen, da derartige Einzugsbereiche eine Gefahrenquelle insbesondere für Mitarbeiter darstellen, die sich im Bereich des Fördergurtes befinden, dort Arbeiten ausführen und mit den Händen oder Kleidungsstücken in den Einzugsbereich gelangen könnten.

Aus der EP 1 847 486 B1 ist eine Stützstation für einen Förderer mit mehreren Führungs- und Stützrollen für ein Förderband bekannt, wobei ein Einklemmschutz vorgesehen ist, der eine Schutz-Profilschiene umfasst, die sich kontinuierlich längs der Länge von wenigstens zwei Tragrollen erstreckt.

Aus der US 3,147,852 ist eine Stützstation zum Abstützen eines Fördergurts einer Gurtförderanlage, mit mehreren an einem Traggerüst drehbar gehaltenen Tragrollen und einem Schutz bekannt, wobei der Schutz benachbart zu einer Tragrolle und in einem Abstand zu dem Fördergurt angeordnet ist und wobei der Schutz an einer Stütze gehalten ist.

Der bekannte Einklemmschutz setzt sich aus mehreren Einklemmschutzabschnitten zusammen, die mit ihrer Längsrichtung jeweils parallel zu einer Tragrolle verlaufen. An Übergangsbereichen zwischen benachbarten Tragrollen, also den Übergangsstellen zwischen den einzelnen Einklemmschutzabschnitten, sind die Einklemmschutzabschnitte miteinander verschweißt. An diesen Stellen bildet der Einklemmschutz scharfkantige und unflexible Winkel aus. Das Förderband weist an diesen Stellen hingegen häufig eine Abrundung mit einem Radius auf, dessen Größe von der Beladung des Förderbandes, der Vorspannung des Förderbandes, der Fördergeschwindigkeit, dem Alter des Förderbandes und weiteren Faktoren abhängt.

Die starren Winkel zwischen den Einklemmschutzabschnitten können nicht den sich ändernden Radien des Förderbandes angepasst werden. So weist der Fördergurt an diesen Stellen u.U. einen unerwünscht großen Abstand zu dem Einklemmschutz auf.

Aufgabe der vorliegenden Erfindung ist es, die oben beschriebenen Probleme zu überwinden. Insbesondere soll eine Stützstation bereitgestellt werden, die einen vorgegebenen, geringen Abstand zwischen Fördergurt und Einklemmschutz gewährleistet.

Erfindungsgemäß wird diese Aufgabe durch eine Stützstation nach Anspruch 1 gelöst. Vorteilhafte Ausführungsformen sind in den Unteransprüchen beschrieben.

Die erfindungsgemäße Stützstation bietet den Vorteil, dass die Abstände zwischen dem Einklemmschutz und dem Fördergurt in einem Einzugsbereich, der in einem Übergangsbereich zwischen benachbarten Tragrollen liegt, verringert werden können. Dies liegt vor allem daran, dass die Stützstation flexibel einstellbar ist. Verändert sich beispielsweise die Form des Fördergurtes aufgrund einer veränderten Beladung, einer veränderten Vorspannung des Fördergurtes, einer Alterung der Gurtförderanlage oder des Fördergurts oder einer veränderten Transportgeschwindigkeit, kann dies durch Einstellen des Einklemmschutzes ausgeglichen werden. Dazu kann die Position eines oder mehrerer Einklemmschutzabschnitte und/oder Zwischenabschnitte verändert werden. Eine nicht verstellbare Stütze kann ganz oder teilweise durch eine Lagerstütze einer Tragrolle oder das Traggerüst gebildet sein.

Wie oben bereits angedeutet, ist eine besonders kritische Position des Einzugsbereichs der Übergangsbereich zwischen zwei Tragrollen. An solchen Stellen ändert sich die Form des Fördergurts besonders stark aufgrund der oben genannten Einflüsse, da er dort auf keiner Tragrolle aufliegt. Die Tragrollen weisen einen Winkel zueinander auf, sodass auch der Einklemmschutz in diesen Abschnitten abgewinkelt ist. Bei bekannten Stützstationen stoßen an dieser Stelle zwei geradlinige Abschnitte des Einklemmschutzes aufeinander. Die Form des Einklemmschutzes bildet also nur unzureichend den Radius des Fördergurts an dieser Stelle ab. So kann ein relativ großer Spalt zwischen Fördergurt und Einklemmschutz entstehen.

Die erfindungsgemäße Stützstation kann diese kritischen Übergangsstellen zwischen zwei Tragrollen besonders gut abdecken, da an diesen Stellen flexible

Zwischenabschnitte vorgesehen sind. Die flexiblen Zwischenabschnitte sind elastisch, d. h. sie lassen sich in einem gewissen Maß verformen. Insbesondere können sie stärker elastisch sein als die sich daran anschließenden Einklemmschutzabschnitte, die jeweils benachbart zu einer Tragrolle angeordnet sind. Bevorzugt sind zwei Einklemmschutzabschnitte, die mittels eines flexiblen Zwischenabschnitts endseitig miteinander verbunden sind, aufgrund der Flexibilität des flexiblen Zwischenabschnittes relativ zueinander bewegbar.

Entsprechend kann der flexible Zwischenabschnitt einen Radius bilden, der im Wesentlichen dem Radius des Fördergurtes an dieser Stelle entspricht. Da die Einklemmschutzabschnitte relativ zueinander bewegbar sind, ist in diesem Fall auch der Radius des flexiblen Zwischenabschnitts verstellbar. Somit kann die Form des flexiblen Zwischenabschnitts flexibel an die Form des Fördergurtes angepasst werden, wenn diese sich verändert. So kann der Abstand zwischen dem flexiblen Zwischenabschnitt und dem Fördergurt minimiert oder auf ein vorgebbares Maß eingestellt werden.

Die Stützstation kann zwei, drei, vier, fünf oder eine größere Anzahl von Tragrollen aufweisen. Der Einklemmschutz kann jeweils einen Einklemmschutzabschnitt je Tragrolle aufweisen. Ein mittlerer Einklemmschutzabschnitt kann fest an einer festen Stütze gehalten sein, während die äußeren beiden Einklemmschutzabschnitte so an der jeweiligen Stütze gelagert sein können, dass sie relativ zu der Stütze bewegbar sind, wobei auch die jeweilige Stütze verstellbar ist oder sein kann.

Zumindest ein Einklemmschutzabschnitt ist durch Verstellen der Stütze, an der er gelagert ist, in seiner Position einstellbar. Es können mehrere, bevorzugt alle Einklemmschutzabschnitte durch Verstellen der jeweiligen Stützen einstellbar sein. In einer Ausführungsform mit drei Tragrollen und drei Einklemmschutzabschnitten können die äußeren beiden Einklemmschutzabschnitte mittels ihrer Stützen einstellbar sein.

Die Drehachsen der Tragrollen einer Stützstation weisen bevorzugt einen Winkel zueinander auf, der bspw. zwischen 5° und 45° liegen kann, so dass der Fördergurt im Querschnitt trogförmig ist und eine mittlere Tragrolle horizontal angeordnet ist.

Eine Stütze, mit der eine Tragrolle abgestützt ist, kann ganz oder teilweise mit einer festen bzw. nicht verstellbaren Stütze eines Einklemmschutzabschnitts übereinstimmen.

In einem unbeladenen oder wenig beladenen Zustand kann es vorkommen, dass der Fördergurt nur entlang einer Linienberührung auf Tragrollen aufliegt, die deutlich kürzer als eine axiale Länge der Tragrolle sein kann. Erhöht sich der Beladungszustand des Fördergurtes, wird der Fördergurt stärker auf die Tragrollen gedrückt und die Kontaktlänge zwischen Tragrollen und Fördergurt wird erhöht, so dass sich die Querschnittsform des Fördergurtes verändert. Bevorzugt liegen alle Rotationsachsen der Tragrollen in einer Ebene, die orthogonal zu einer Förderrichtung des Fördergurtes liegt. Die Einklemmschutzabschnitte sind unterhalb des Fördergurtes angeordnet und befinden sich in Förderrichtung gesehen vor oder stromauf einer Tragrolle. Jeder Einklemmschutzabschnitt kann entlang einer Parallelen zur Rotationsachse der entsprechenden Tragrolle mittig vor der Tragrolle angeordnet sein. Dabei kann der Einklemmschutzabschnitt entlang der Rotationsachse der Tragrolle zumindest eine Länge von 50 %, 75 %, 80 % oder 90% einer Länge der Tragrolle abdecken. Ein sich an zwei Einklemmschutzabschnitte jeweils endseitig anschließender, flexibler Zwischenabschnitt deckt einen Übergangsbereich zwischen zwei Tragrollen ab, der mindestens 5 %, 10 %, 25% oder 50% einer Länge der jeweiligen Tragrolle betragen kann.

Die Tragrollen können passiv drehende Rollen sein, die lediglich durch die Bewegung des Fördergurtes angetrieben sind, oder aktiv drehende Rollen, die mit einem Antrieb versehen oder gekoppelt sind und den Fördergurt antreiben.

Die Position der Lagerung mindestens eines Einklemmschutzabschnittes kann durch ein Verstellen der Stütze des Einklemmschutzabschnitts in einer vertikalen Richtung oder in einer Richtung parallel zu einer Drehachse einer benachbarten Tragrolle verstellbar sein. Mindestens eine Stütze kann in Förderrichtung der Gurtförderanlage, d.h. in Laufrichtung des Fördergurts verlagerbar oder verstellbar sein.

Die Stützen können auf einem Untergrund befestigt sein, oder an einem Gestell befestigt sein, an dem auch die Tragrollen gehalten sind.

Die Form eines Zwischenabschnittes kann durch eine Veränderung der Position benachbarter Einklemmschutzabschnitte relativ zueinander verändert werden. Verändert sich die relative Lage zweier benachbarter Einklemmschutzabschnitte zueinander, wird ein Einklemmschutzabschnitt, der über eine Lagerung in Längsrichtung bewegbar an einer Stütze gelagert ist, entlang einer Verstellrichtung verschoben, da er über den flexiblen Zwischenabschnitt mit einem benachbarten Einklemmschutzabschnitt verbunden ist. Dadurch ändert sich die Steigung und der Krümmungsradius des Zwischenabschnitts, der die beiden Einklemmschutzabschnitte miteinander verbindet.

Mindestens eine Stütze kann über eine Lagerung mit dem daran gehaltenen Einklemmschutzabschnitt verbunden sein, wobei die Lagerung eine begrenzte Längsbewegung des Einklemmschutzabschnitts relativ zu der Stütze parallel zu der Drehachse der Tragrolle, die sich benachbart zu dem Einklemmschutzabschnitt befindet, zulässt, oder anders gesagt eine begrenzte Längsbewegung des Einklemmschutzabschnitts relativ zu der Stütze in einer Richtung zulässt, die parallel zu der Drehachse der Tragrolle verläuft, die sich benachbart zu dem Einklemmschutzabschnitt befindet.

Zumindest einer der Einklemmschutzabschnitte kann fest, also unbeweglich, an dessen Stütze gelagert sein. Weist die Stützstation drei Einklemmschutzabschnitte auf, ist bevorzugt der mittlere Einklemmschutzabschnitt fest und die äußeren Einklemmschutzabschnitte über jeweils eine Lagerung beweglich gelagert. Die Lagerung kann ein Gleit- oder Rollenlager sein.

Eine wichtige Eigenschaft des Einklemmschutzes der Stützstation besteht darin, dass die reale, sich im Betrieb einstellende Gurtform oder Querschnittsform des Fördergurts von dem Einklemmschutz abgebildet wird, wobei dieser dem Fördergurt auf einen geringen Abstand, bspw. höchstens 1 mm, 2 mm, 5 mm oder 10 mm, angenähert wird, zweckmäßigerweise über die gesamte Breite des Fördergurts.

Die Stützstation kann weiterhin eine Steuereinrichtung zum Verstellen zumindest eines der Einklemmschutzabschnitte aufweisen.

Die Stützstation kann einen Sensor umfassen. Der Sensor kann ein optischer Sensor, zum Beispiel eine Kamera oder ein laserbasierter Sensor sein. Der Sensor kann zum Ermitteln eines Abstands zwischen dem Fördergurt und zumindest einem Teil des Einklemmschutzes, insbesondere zumindest einem flexiblen Zwischenabschnitt, genutzt werden. Der Sensor kann mit der Steuereinrichtung in Verbindung stehen und die Steuereinrichtung kann die Position des Einklemmschutzabschnittes auf Grundlage des ermittelten Abstands verstellen.

Die Steuereinrichtung kann über einen Speicher verfügen, in dem Sollpositionen eines Einklemmschutzabschnittes hinterlegt sein können. Die Sollpositionen können von der Steuereinrichtung anhand eines ermittelten, tatsächlichen Abstands zwischen dem Fördergurt und zumindest einem Teil des Einklemmschutzes oder anhand eines Beladungszustandes oder einer Fördergeschwindigkeit der Gurtförderanlage bestimmbar sein.

Die Drehachsen der Tragrollen der Stützstation können verstellbare Winkel zueinander aufweisen. Dabei können Winkel der Einklemmschutzabschnitte des Einklemmschutzes zueinander veränderbar sein, um bei einer Winkeländerung der Tragrollen einen Kontakt mit dem Fördergurt oder einen zu großen Abstand zum Fördergurt zu verhindern. Der zumindest eine Einklemmschutzabschnitt kann schwenkbar gelagert sein, oder eine Stütze eines Einklemmschutzabschnitts kann an einer Halterung der Tragrolle befestigt sein, so dass sich der Winkel des Einklemmschutzes automatisch beim Verstellen des Winkels der Tragrolle verändert. Die Erfindung bezieht sich außerdem auf eine Gurtförderanlage nach Anspruch 13 und auf ein Verfahren nach Anspruch 15.

Es kann eine einheitliche Steuereinrichtung, wie oben beschrieben, für die gesamte Gurtförderanlage genutzt werden. Entsprechend können mehrere Stützstationen entlang der Gurtförderanlage über die Steuereinrichtung gesteuert werden. In einer Stützstation können/kann mehrere flexible Zwischenabschnitte oder jeder oder nur ein flexibler Zwischenabschnitt mit einem Sensor wie oben beschrieben ausgestattet sein. Außerdem kann/können mehrere Einklemmschutzabschnitte oder nur ein oder jeder Einklemmschutzabschnitt mit einem Sensor wie oben beschrieben ausgestattet sein. In einer Gurtförderanlage kann/können eine Stützstation oder mehrere Stützstationen mit einem Sensor, wie oben beschrieben, ausgestattet sein. Sind nicht alle Stützstationen und/oder Einklemmschutzabschnitte und/oder flexible Zwischenabschnitte mit Sensoren ausgestattet, können die Stützstationen, Einklemmschutzabschnitte und/oder flexiblen Zwischenabschnitte anhand des Abstands/der Abstände gesteuert werden, die an der oder den Stützstationen, dem oder den Einklemmschutzabschnitten und/oder dem oder den flexiblen Zwischenabschnitten mit mindestens einem Sensor ermittelt wurden. Die Sensoren können in einen flexiblen Zwischenabschnitt, eine Stütze und/oder einen Einklemmschutzabschnitt integriert oder an diesem befestigt sein.

Die Stützstation kann mittels der Steuereinrichtung automatisiert sein, um den Einklemmschutz selbsttätig an einer Anzahl von Stellen in einem vorgegebenen Abstand zu dem Fördergurt einzustellen. Durch eine Anzahl von Sensoren wie bspw. Kameras oder Abstandssensoren, zweckmäßigerweise direkt im Einklemmschutz integriert, können die Abstände erfasst und über die Steuereinrichtung die verstellbaren Stützen so verstellt werden, dass die vorgegebenen Abstände erreicht werden. Durch mindestens eine verstellbare Stütze wird der darin gehaltene Einklemmschutzabschnitt in einer Richtung quer und/oder parallel zu einer Drehachse der benachbarten Tragrolle verstellt. Zusätzlich kann an mindestens einer mit einer Lagerung versehenen Stütze der darin gehaltene Einklemmschutzabschnitt parallel zu der Drehachse der benachbarten Tragrolle verlagert werden, wodurch ein flexibler Zwischenabschnitt zwischen zwei benachbarten Einklemmschutzabschnitten verformt und dessen Krümmungsradius verändert und insbesondere an den Krümmungsradius des Fördergurts angeglichen oder in dieser Richtung verändert wird, wodurch auch der Abstand des Zwischenabschnitts zu dem Fördergurt verändert wird.

Eine Anzahl von Stützstationen, die jeweils mit einem Einklemmschutz versehen sind, können vernetzt sein, so dass ein oder mehrere Abstandssensoren an einer Stützstation die Eingreifschutz-Elemente an mehreren Stützstationen einstellen kann.

Im Folgenden wird ein Ausführungsbeispiel einer erfindungsgemäßen Stützstation, die in der Regel vielfach in einer Gurtförderanlage vorhanden ist, anhand einer Zeichnung näher beschrieben.
Figur 1 zeigt eine Frontansicht einer erfindungsgemäßen Stützstation,
Figur 2 zeigt eine perspektivische Ansicht einer erfindungsgemäßen Stützstation.

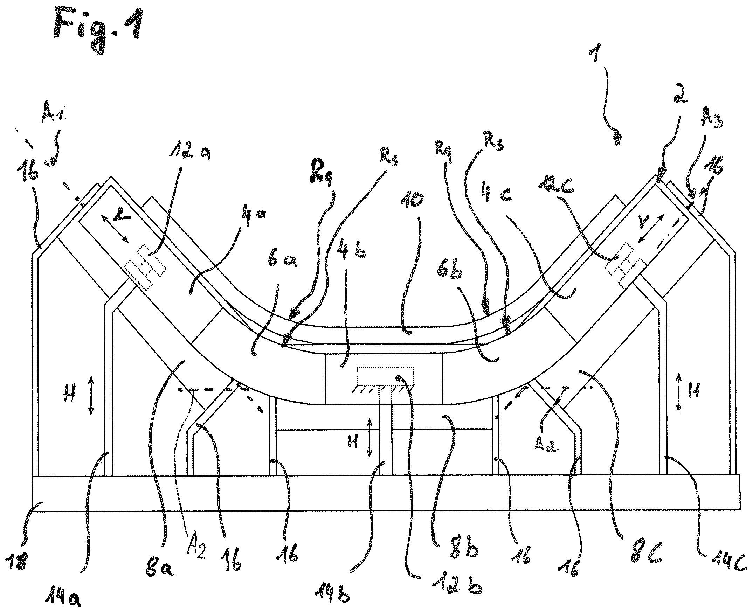

Figur 1 zeigt eine erfindungsgemäße Stützstation 1 mit einem Einklemmschutz 2, der aus drei Einklemmschutzabschnitten 4a, 4b 4c und zwei zwischen je zwei benachbarten Einklemmschutzabschnitten 4a, 4b, 4c angeordneten Zwischenabschnitten 6a, 6b besteht. Der Einklemmschutz 2 ist im dargestellten Ausführungsbeispiel vor drei Tragrollen 8a, 8b, 8c und unterhalb eines Fördergurtes 10, der von den drei Tragrollen 8a, 8b, 8c getragen wird, angeordnet. Somit wird ein Einzugsbereich zwischen dem Fördergurt 10 und den Tragrollen 8a, 8b und 8c abgedeckt. Ein solcher Einklemmschutz ist wichtig, da ansonsten Gegenstände, Kleidungsstücke oder Körperteile, die mit dem Förderband und/oder der Tragrolle in Kontakt kommen, in Richtung der Stützstation, also zwischen Tragrolle und Förderband, eingezogen werden könnten.

Der Einklemmschutz 2 wird von drei Stützen 14a, 14b und 14c getragen. Dazu weisen die Stützen 14a, 14b, 14c Lagerungen 12a, 12b, 12c auf, an denen die Klemmschutzabschnitte 4a, 4b, 4C gehalten sind. Die Tragrollen 8a, 8b 8c werden von Lagerstützen 16 getragen.

Die Stützen 14a, 14b, 14c, 16 sind an einem Traggestell 18 der Gurtförderanlage befestigt.

Die Tragrollen 8a, 8b, 8c sind drehbar an den Lagerstützen 16 gelagert, wobei Drehachsen A1, A2, A3 der Tragrollen 8a, 8b, 8c winkelig zueinander angeordnet sind und der Fördergurt 10 eine muldenartige Form erhält. Im Übergangsbereich zwischen zwei Tragrollen 8a, 8b, 8c stellt sich je nach Beladung, Vorspannung oder anderen Einflussfaktoren einen Krümmung R_{G} des Fördergurtes mit einem Radius ein. Dieser Bereich wird hinsichtlich des Einklemmschutzes von den Zwischenabschnitten 6a, 6b abgedeckt, die den Radius der Krümmung R_{G} des Fördergurtes 10 nachbilden. Dazu sind die Radien der Krümmungen R_{S} der Zwischenabschnitte 6a, 6b einstellbar.

Die Stützen 14a, 14b und 14c, an denen die Einklemmschutzabschnitte 12a, 12b und 12c befestigt sind, lassen sich in vertikaler Richtung H verstellen, d.h. in ihrer Höhe. Dazu können die Stützen 14a, 14b, 14c teleskopartig ausgebildet sein. So wird durch das Verstellen der Stützen 14a, 14b und 14c die Position der Lagerungen 12a, 12b und 12c verändert. Im dargestellten Ausführungsbeispiel ändert sich dadurch die Position der Lagerungen 12a, 12b, 12c in vertikaler Richtung. Die Position der Lagerungen 12a, 12b, 12c kann alternativ oder zusätzlich in einer horizontalen Richtung verändert werden.

Die beiden äußeren Einklemmschutzabschnitte 12a, 12c lassen sich zusätzlich entlang einer zweiten, parallel zur Drehachse der jeweils benachbarten Tragrolle 4a, 4c verlaufenden Verstellrichtung V relativ zu den beiden äußeren Stützen 14a, 14c bewegen. Auch die Lagerung 12b des mittleren Einklemmschutzabschnitts 4b könnte eine solche Relativbewegung zwischen dem Einklemmschutzabschnitt 4b und der Stütze 14b zulassen. Im dargestellten Beispiel ist die Lagerung 12b jedoch ein Festlager, sodass keine Relativbewegung zwischen dem Einklemmschutzabschnitt 4b und der Stütze 14b stattfinden kann.

Die Lagerungen 12a, 12c, an denen die beiden äußeren Einklemmschutzabschnitte 4a und 4c gelagert sind, können über einen Antrieb verfügen. In diesem Fall können die Einklemmschutzabschnitte 4a, 4c entlang der Verstellrichtung V unabhängig von der sonstigen Position oder Höhenposition der Lagerung 12a, 12c verfahren werden. Die Verstellrichtung V verläuft parallel zur Drehachse der benachbarten Tragrolle und auch parallel zur Längserstreckung der Einklemmschutzabschnitte 4a und 4c und ist durch die Lagerung 12a, 12c vorgegeben. Werden die Einklemmschutzabschnitte 4a und 4c nach außen bewegt, also von dem mittleren Einklemmschutzabschnitt 4b weg, werden die Zwischenabschnitte 6a und 6b in die Länge gezogen, so dass sich der Radius der Krümmung Rₛ der Zwischenabschnitte 6a und 6b vergrößert. Werden die Einklemmschutzabschnitte 4a und 4c nach innen, also in Richtung des mittleren Einklemmschutzabschnitts 4b bewegt, werden die Zwischenabschnitte 6a und 6b zusammengeschoben und der Radius der Krümmung R_{S} der Zwischenabschnitte 6a und 6b nimmt ab. Die Höhe aller drei Stützen 14a, 14b und 14c ist unabhängig davon individuell verstellbar. Somit kann der Radius der Krümmung R_{S} der Zwischenabschnitte 6a und 6b dem Radius der Krümmung R_{G} des Fördergurtes 10 am Übergang zwischen zwei benachbarten Tragrollen 8a, 8b und 8c angepasst werden und der Einklemmschutz 2 kann in einem vorgegebenen Abstand von dem Fördergurt 10 positioniert werden.

Alternativ können einzelne Lagerungen, insbesondere die Lagerungen 12a und 12c, ohne eigenen Antrieb ausgestattet sein, aber eine Relativbewegung des jeweiligen Einklemmschutzabschnitts in Verstellrichtung V zulassen. Das heißt, die beiden äußeren Einklemmschutzabschnitte 4a und 4c werden passiv bzw. durch ein Verstellen der Stützen 14a, 14b, 14c relativ zu einander verlagert. Wird zum Beispiel die mittlere Stütze 14b relativ zu den äußeren Stützen 14a, 14c vertikal nach oben bewegt, können die beiden äußeren Einklemmschutzabschnitte 4a und 4c entlang der Verstellrichtung V von den flexiblen Zwischenabschnitten 6a und 6b nach außen verschoben werden. Da die beiden äußeren Verstellabschnitte 4a und 4c in den Lagerungen 12a, 12c auf einer schrägen, geführten Bahn (in der Verstellrichtung V) bewegt werden und der mittlere Einklemmschutzabschnitt 4b lediglich in vertikaler Richtung bewegt wird, nimmt der Abstand zwischen den Klemmschutzabschnitten 4a, 4b, 4c in vertikaler Richtung ab. Dadurch ändern sich die Steigung und der Krümmungsradius der Zwischenabschnitte 6a und 6b. Die Steigung der Zwischenabschnitte 6a und 6b nimmt im beschriebenen Beispiel ab und der Krümmungsradius zu. Eine vergleichbare Wirkung würde durch ein Absenken der Stützen 14a und 14c der beiden äußeren Verstellabschnitte 4a und 4c hervorgerufen werden. Ein Absenken des mittleren Verstellabschnitts 4b relativ zu den beiden äußeren Verstellabschnitten 4a, 4c würde das Gegenteil bewirken. Der Krümmungsradius und die Steigung der Zwischenabschnitte 6a und 6b lassen sich über die relative Lage der Lagerungen 12a, 12b, 12c der Einklemmschutzabschnitte 4a, 4b, 4c zueinander einstellen, während der Abstand des Einklemmschutzes 2 zu dem Fördergurt 10 über die absolute Höhe bzw. die absolute Lage der Lagerungen einstellbar ist.

Werden die beiden äußeren Klemmschutzabschnitte 4a und 4c in der Verstellrichtung V nicht aktiv, sondern passiv (also ohne Antrieb) verstellt, können die Lagerungen 12a und 12c bspw. als Gleitlager oder Rollenlager (zum Beispiel Kugel- oder Kegelrollenlager) ausgeführt sein.

Durch die feste Lagerung der mittleren Lagerung 12b sind auch im Fall eines passiven Verstellens der beiden äußeren Einklemmschutzabschnitte 4a und 4c die Positionen der Einklemmschutzabschnitte 4a, 4b, 4c durch die Positionen der Lagerung 12a, 12b, 12c eindeutig definiert.

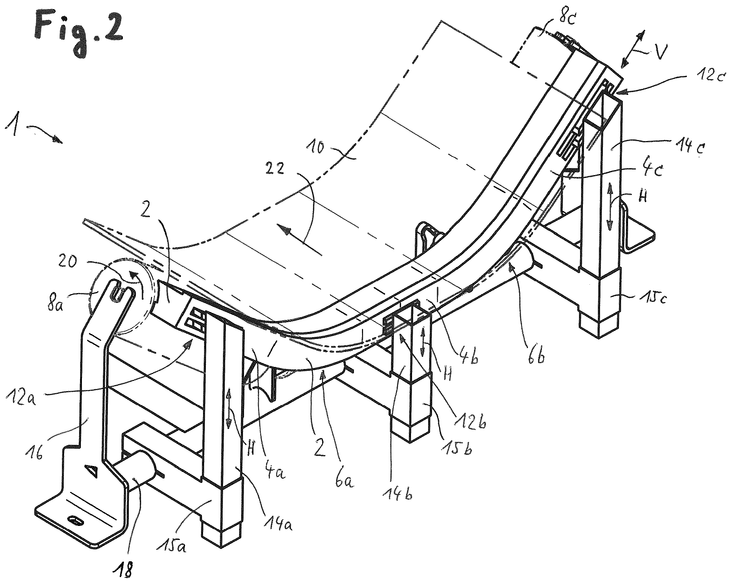

Figur 2 zeigt eine perspektivische Ansicht einer ähnlichen Ausführungsform einer Stützstation, wobei die Anordnung von Fördergurt 10 mit Förderrichtung 22, Tragrollen 8a, 8c (mittlere Tragrolle nicht dargestellt) und Drehrichtung 20 sowie Einklemmschutz 2 mit Einklemmschutzabschnitten 4a, 4b, 4c, Zwischenabschnitten 6a, 6b, Lagerungen 12a, 12b, 12c und Stützen 14a, 14b, 14c sowie Lagerstützen 16 der Ausführungsform nach Figur 1 entspricht. Figur 2 zeigt beispielhaft, wie die Stützen 14a, 14b, 14c in Halterungen 15a, 15b, 15c aufgenommen und vertikal verstellbar sein können, wobei die mittlere Stütze 14b fest in der Halterung 15b gehalten sein kann.

Weiterhin zeigt Figur 2 eine beispielhafte Ausführung der Lagerungen 12a, 12b, 12c, wobei die seitlichen Einklemmschutzabschnitte 4a, 4b, 4c an Lagerungen 12a, 12c in einer Verstellrichtung V verschieblich an den Stützen 14a, 14c gehalten sind, und die jeweilige Verstellrichtung V parallel zu der Drehachse der jeweils benachbarten Tragrolle verläuft. Die Lagerung 12b des mittleren Einklemmschutzabschnitts 4b an der mittleren Stütze 14b kann starr sein, d.h. der Einklemmschutzabschnitt 4b kann fest mit der Stütze 14b verbunden sein, und diese kann fest mit dem Traggestell 18 verbunden sein.

Das Traggestell 18 ist durch ein horizontales Rohr versinnbildlicht, oder kann dieses umfassen, wobei die Halterungen 15a, 15b, 15c der Stützen an dem Traggestell 18 fixiert sind.

### Bezugszeichenliste

- 1: Stützstation
- 2: Einklemmschutz
- 4a, 4b, 4c: Einklemmschutzabschnitt
- 6a, 6b: Zwischenabschnitt
- 8a, 8b, 8c: Tragrolle
- 10: Fördergurt
- 12a, 12b, 12c: Lagerung
- 14a, 14b, 14c: Stütze
- 15a, 15b, 15c: Halterung
- 16: Lagerstütze
- 18: Traggestell
- 20: Drehrichtung
- 22: Förderrichtung
- A1, A2, A3: Rotationsachse
- H: vertikale Richtung
- R_{G}: Krümmung des Fördergurts
- Rs: Krümmung des Zwischenabschnitts
- V: Verstellrichtung

## Patentansprüche

1. Stützstation zum Abstützen eines Fördergurts einer Gurtförderanlage, mit
mehreren an einem Traggerüst drehbar gehaltenen Tragrollen (8a, 8b, 8c), und
einem Einklemmschutz (2) mit mehreren Einklemmschutzabschnitten (4a, 4b, 4c), wobei jeweils ein Einklemmschutzabschnitt benachbart zu einer Tragrolle (8a, 8b, 8c) und in einem Abstand zu dem Fördergurt angeordnet ist,
wobei jeder Einklemmschutzabschnitt (4a, 4b, 4c) an einer Stütze (14a, 14b, 14c) gehalten ist,
wobei jeweils ein flexibler Zwischenabschnitt (6a, 6b) zwischen Enden von zwei benachbarten Einklemmschutzabschnitten (4a, 4b, 4c) angeordnet ist und diese flexibel miteinander verbindet,
wobei zumindest eine der Stützen (14a, 14b, 14c) verstellbar und dadurch der Abstand des daran gehaltenen Einklemmschutzabschnitts (4a, 4b, 4c) von dem Fördergurt (10) und ein Abstand mindestens eines Zwischenabschnitts (6a, 6b) von dem Fördergurt (10) einstellbar ist.

2. Stützstation nach Anspruch 1, **dadurch gekennzeichnet, dass** mindestens einer der Einklemmschutzabschnitte (4a, 4b, 4c) starr oder flexibel ist, wobei der Einklemmschutz (2) insgesamt einstückig ausgebildet sein kann.

3. Stützstation nach einem der vorangehenden Ansprüche, **dadurch gekennzeichnet, dass** durch mindestens eine verstellbare Stütze (14a, 14b, 14c) der daran gehaltene Einklemmschutzabschnitt (4a, 4b, 4c) in einer Richtung quer und/oder parallel zu einer Drehachse der benachbarten Tragrolle (8a, 8b, 8c) verstellbar ist.

4. Stützstation nach einem der vorangehenden Ansprüche, **dadurch gekennzeichnet, dass** mindestens eine verstellbare Stütze (14a, 14b, 14c) in einer Richtung quer und/oder parallel zu einer Drehachse der Tragrolle (8a, 8b, 8c), die sich benachbart zu dem von der Stütze (14a, 14b, 14c) gehaltenen Einklemmschutzabschnitt (4a, 4b, 4c) befindet, verstellbar ist.

5. Stützstation nach einem der vorangehenden Ansprüche, **dadurch gekennzeichnet, dass** mindestens eine Stütze (14a, 14b, 14c) fest mit dem daran gehaltenen Einklemmschutzabschnitt (4a, 4b, 4c) verbunden ist.

6. Stützstation nach einem der vorangehenden Ansprüche, **dadurch gekennzeichnet, dass** mindestens eine Stütze (14a, 14b, 14c) über eine Lagerung (12a, 12b, 12c) mit dem daran gehaltenen Einklemmschutzabschnitt (4a, 4b, 4c) verbunden ist, wobei die Lagerung (12a, 12b, 12c) eine begrenzte Längsbewegung des Einklemmschutzabschnitts relativ zu der Stütze (14a, 14b, 14c) in einer parallel zu der Drehachse der Tragrolle (8a, 8b, 8c), die sich benachbart zu dem Einklemmschutzabschnitt befindet, verlaufenden Verstellrichtung (V) zulässt.

7. Stützstation nach Anspruch 6, **dadurch gekennzeichnet, dass** mindestens eine Lagerung (12a, 12b, 12c) einen ersten Verstellantrieb zum Verstellen des daran gehaltenen Einklemmschutzabschnitts (4a, 4b, 4c) in der Verstellrichtung (V) aufweist.

8. Stützstation nach einem der vorangehenden Ansprüche, **dadurch gekennzeichnet, dass** mehrere oder alle Stützen (14a, 14b, 14c) durch einen zweiten Verstellantrieb gemeinsam und parallel zueinander verstellbar sind oder durch mehrere zweite Verstellantriebe, insbesondere einen zweiten Verstellantrieb je Stütze, unabhängig voneinander oder gruppenweise in vorgegebenen Gruppen verstellbar sind.

9. Stützstation nach einem der vorangehenden Ansprüche, **gekennzeichnet durch** eine Steuereinrichtung zum Verstellen der Position oder zum Einstellen eines Abstands von dem Fördergurt (10) zumindest eines der Einklemmschutzabschnitte (4a, 4b, 4c) und mindestens eines der Zwischenabschnitte (6a, 6b), wobei die Steuereinrichtung mit mindestens einem ersten Verstellantrieb und/oder mindestens einem zweiten Verstellantrieb mindestens einer der Stützen (14a, 14b, 14c) und/oder mindestens einer Lagerung (12a, 12b, 12c) in Verbindung steht.

10. Stützstation nach Anspruch 9, **gekennzeichnet durch** einen Sensor zum Ermitteln eines Abstands zwischen dem Fördergurt (10) und einem Einklemmschutzabschnitt (4a, 4b, 4c) und/oder einem flexiblen Zwischenabschnitt (6a, 6b), wobei der Sensor mit der Steuereinrichtung verbunden ist und die Steuereinrichtung zum Ansteuern mindestens eines ersten Verstellantriebs und/oder mindestens eines zweiten Verstellantriebs auf der Grundlage des ermittelten Abstands eingerichtet ist, insbesondere um einen vorgegebenen Abstand zwischen einem Einklemmschutzabschnitt oder einem Zwischenabschnitt und dem Fördergurt (10) einzustellen.

11. Stützstation nach Anspruch 10, **dadurch gekennzeichnet, dass** mindestens ein Sensor in einem Einklemmschutzabschnitt und/oder in einem Zwischenabschnitt integriert ist.

12. Stützstation nach einem der vorangehenden Ansprüche, **gekennzeichnet durch** einen Energiewandler, der aus der Rotation einer der Tragrollen (8a, 8b, 8c) elektrische Energie für mindestens einen ersten und/oder zweiten Verstellantrieb und/oder einenSensor erzeugt.

13. Gurtförderanlage mit mindestens einer Stützstation nach einem der vorangehenden Ansprüche.

14. Gurtförderanlage nach Anspruch 13, **dadurch gekennzeichnet, dass** mehrere Stützstationen vernetzt sind, wobei Abstände zwischen dem Fördergurt (10) und Einklemmschutzabschnitten und/oder Zwischenabschnitten mehrerer Stützstationen auf der Grundlage eines an einer einzigen Stützstation ermittelten Abstands zwischen dem Fördergurt und einem Einklemmschutzabschnitt und/oder einem Zwischenabschnitt dieser Stützstation einstellbar ist.

15. Verfahren zum Einstellen eines Abstands zwischen einem Fördergurt (10) und einem Einklemmschutz (2) an einer Stützstation (1) nach einem der Ansprüche 1 bis 12, mit den Schritten:
a) Erfassen eines Abstands zwischen einem Einklemmschutzabschnitt (4a, 4b, 4c) und/oder einem Zwischenabschnitt (6a, 6b) des Einklemmschutzes (2) und dem Fördergurt (10),
b) Vergleichen des erfassten Abstands mit einem vorgegebenen Abstand und
c) Verstellen mindestens einer Stütze (14a, 14b, 14c) und Verändern des Abstands zumindest eines Einklemmschutzabschnitts und/oder eines Zwischenabschnitts von dem Fördergurt (10) in Richtung auf den vorgegebenen Abstand; und/oder Verlagern eines Einklemmschutzabschnitts (4a, 4b, 4c) in einer Verstellrichtung (V) relativ zu einer Stütze (14a, 14b, 14c).

## Claims

1. Support station for supporting a conveyor belt of a belt conveyor system, with
several support rollers (8a, 8b, 8c) that are held rotatably on a supporting frame, and
an anti-trap protection (2) with several anti-trap protection sections (4a, 4b, 4c), wherein in each case an anti-trap protection section is arranged adjacent to a support roller (8a, 8b, 8c) and at a distance from the conveyor belt,
wherein each anti-trap protection section (4a, 4b, 4c) is held on a support (14a, 14b, 14c),
wherein in each case a flexible intermediate section (6a, 6b) is arranged between ends of two adjacent anti-trap protection sections (4a, 4b, 4c) and connects them flexibly to one another,
wherein at least one of the supports (14a, 14b, 14c) is adjustable and thereby the distance of the anti-trap protection section (4a, 4b, 4c) that is held on it from the conveyor belt (10) and a distance of at least one intermediate section (6a, 6b) from the conveyor belt (10) can be set.

2. Support station according to claim 1, **characterised in that** at least one of the anti-trap protection sections (4a, 4b, 4c) is rigid or flexible, wherein the anti-trap protection (2) as a whole can be formed in one piece.

3. Support station according to one of the preceding claims, **characterised in that** by means of at least one adjustable support (14a, 14b, 14c), the anti-trap protection section (4a, 4b, 4c) that is held on it can be adjusted in a direction crosswise and/or parallel to a rotational axis of the adjacent support roller (8a, 8b, 8c).

4. Support station according to one of the preceding claims, **characterised in that** at least one adjustable support (14a, 14b, 14c) can be adjusted in a direction crosswise and/or parallel to a rotational axis of the support roller (8a, 8b, 8c) that is situated adjacent to the anti-trap protection section (4a, 4b, 4c) that is held by the support (14a, 14b, 14c).

5. Support station according to one of the preceding claims, **characterised in that** at least one support (14a, 14b, 14c) is firmly connected to the anti-trap protection section (4a, 4b, 4c) that is held on it.

6. Support station according to one of the preceding claims, **characterised in that** at least one support (14a, 14b, 14c) is connected via a bearing (12a, 12b, 12c) to the anti-trap protection section (4a, 4b, 4c) that is held on it, wherein the bearing (12a, 12b, 12c) allows a limited longitudinal movement of the anti-trap protection section relative to the support (14a, 14b, 14c) in a direction of adjustment (V) that runs parallel to the rotational axis of the support roller (8a, 8b, 8c) that is located adjacent to the anti-trap protection section.

7. Support station according to claim 6, **characterised in that** at least one bearing (12a, 12b, 12c) has a first adjustment drive for adjusting the anti-trap protection section (4a, 4b, 4c)that is held on it in the direction of adjustment (V).

8. Support station according to one of the preceding claims, **characterised in that** several or all supports (14a, 14b, 14c) can be adjusted jointly and parallel to one another by means of a second adjustment drive, or independently of one another or groupwise in specified groups by means of several second adjustment drives, in particular a second adjustment drive per support.

9. Support station according to one of the preceding claims, **characterised by** a control device for adjusting the position or for setting a distance from the conveyor belt (10) of at least one of the anti-trap protection sections (4a, 4b, 4c) and of at least one of the intermediate sections (6a, 6b), wherein the control device is connected to at least one first adjustment drive and/or at least one second adjustment drive of at least one of the supports (14a, 14b, 14c) and/or at least one bearing (12a, 12b, 12c).

10. Support station according to claim 9, **characterised by** a sensor for determining a distance between the conveyor belt (10) and an anti-trap protection section (4a, 4b, 4c) and/or a flexible intermediate section (6a, 6b), wherein the sensor is connected to the control device, and the control device is set up to actuate at least one first adjustment drive and/or at least one second adjustment drive on the basis of the distance that has been determined, in particular in order to set a specified distance between an anti-trap protection section or an intermediate section and the conveyor belt (10).

11. Support station according to claim 10, **characterised in that** at least one sensor is integrated into an anti-trap protection section and/or an intermediate section.

12. Support station according to one of the preceding claims, **characterised by** an energy converter that generates electrical energy from the rotation of one of the support rollers (8a, 8b, 8c) for at least one first and/or second adjustment drive and/or a sensor.

13. Belt conveyor system with at least one support station according to one of the preceding claims.

14. Belt conveyor system according to claim 13, **characterised in that** several support stations are interlinked, wherein distances between the conveyor belt (10) and anti-trap protection sections and/or intermediate sections of several support stations can be set on the basis of a distance, determined at a single support station, between the conveyor belt and an anti-trap protection section and/or an intermediate section of this support station.

15. Method for setting a distance between a conveyor belt (10) and an anti-trap protection (2) on a support station (1) according to one of the claims 1 to 12, with the steps:
a) recording a distance between an anti-trap protection section (4a, 4b, 4c) and/or an intermediate section (6a, 6b) of the anti-trap protection (2) and the conveyor belt (10),
b) comparing the recorded distance with a specified distance, and
c) adjusting at least one support (14a, 14b, 14c) and changing the distance of at least one anti-trap protection section and/or an intermediate section from the conveyor belt (10) in the direction towards the specified distance; and/or displacing an anti-trap protection section (4a, 4b, 4c) in a direction of adjustment (V) relative to a support (14a, 14b, 14c).

## Revendications

1. Poste de soutien conçu pour soutenir une bande de convoyage d'un convoyeur à bande, composé des éléments suivants :
plusieurs rouleaux de soutien (8a, 8b, 8c) qui sont maintenus en rotation sur un cadre de soutien et
une protection antiblocage (2) comportant plusieurs sections de protection antiblocage (4a, 4b, 4c) et, dans chaque cas, une section de protection antiblocage est implantée à proximité immédiate d'un rouleau de soutien (8a, 8b, 8c) et à une certaine distance de la bande de convoyage,
et chaque section de protection antiblocage (4a, 4b, 4c) vient se fixer sur un support (14a, 14b, 14c),
et, dans chaque cas, une section intermédiaire souple (6a, 6b) vient s'implanter entre les extrémités de deux sections adjacentes de protection antiblocage (4a, 4b, 4c) et les relie, de manière souple, les unes aux autres,
et au moins un des supports (14a, 14b, 14c) est réglable, ce qui permet de programmer la distance de la section de protection antiblocage (4a, 4b, 4c) qui vient s'y fixer, depuis la bande de convoyage (10) et une distance d'au moins une section intermédiaire (6a, 6b) depuis la bande de convoyage (10).

2. Le poste de soutien que décrit la revendication 1, et qui se **caractérise par le fait qu'**au moins une des sections de protection antiblocage (4a, 4b, 4c) est rigide ou souple, et si ce n'est que la protection antiblocage (2), globalement, peut être composée d'une seule pièce.

3. Le poste de soutien que décrit l'une ou l'autre des revendications précédentes, et qui se **caractérise par le fait que**, par le biais d'au moins un support réglable (14a, 14b, 14c), la section de protection antiblocage (4a, 4b, 4c) qui vient s'y fixer peut se régler dans un sens transversal et (ou) dans un sens parallèle à un axe de rotation du rouleau de soutien adjacent (8a, 8b, 8c).

4. Le poste de soutien que décrit l'une ou l'autre des revendications précédentes, et qui se **caractérise par le fait qu'**au moins un support réglable (14a, 14b, 14c) peut se régler dans un sens transversal et (ou) dans un sens parallèle à un axe de rotation du rouleau de soutien adjacent (8a, 8b, 8c) qui se trouve à proximité immédiate de la section de protection antiblocage (4a, 4b, 4c) qui est maintenue en place par le support (14a, 14b, 14c).

5. Le poste de soutien que décrit l'une ou l'autre des revendications précédentes, et qui se **caractérise par le fait qu'**au moins un support (14a, 14b, 14c) vient se rattacher fermement à la section de protection antiblocage (4a, 4b, 4c) qui vient s'y fixer.

6. Le poste de soutien que décrit l'une ou l'autre des revendications précédentes, et qui se **caractérise par le fait qu'**au moins un support (14a, 14b, 14c) vient se rattacher, par le biais d'un palier (12a, 12b, 12c), à la section de protection antiblocage (4a, 4b, 4c) qui vient s'y fixer, et si ce n'est que ce palier (12a, 12b, 12c) permet un déplacement longitudinal limité de la section de protection antiblocage par rapport au support (14a, 14b, 14c), dans un sens de réglage (V) qui se situe parallèlement à l'axe de rotation du rouleau de soutien (8a, 8b, 8c) qui est implanté à proximité immédiate de la section de protection antiblocage.

7. Le poste de soutien que décrit la revendication 6, et qui se **caractérise par le fait qu'**au moins un palier (12a, 12b, 12c) a un premier entraînement de réglage qui permet d'ajuster la section de protection antiblocage (4a, 4b, 4c) qui vient s'y fixer, dans le sens de réglage (V).

8. Le poste de soutien que décrit l'une ou l'autre des revendications précédentes, et qui se **caractérise par le fait que** plusieurs ou tous les supports (14a, 14b, 14c) peuvent se régler ensemble et parallèlement les uns aux autres, par l'entremise d'un deuxième entraînement de réglage, ou indépendamment les uns des autres ou en plusieurs groupes, par l'entremise de plusieurs deuxièmes entraînements de réglage, et en particulier un deuxième entraînement de réglage par support.

9. Le poste de soutien que décrit l'une ou l'autre des revendications précédentes, et qui se **caractérise par** un dispositif de commande qui permet d'ajuster la position ou de programmer une distance depuis la bande de convoyage (10) d'au moins l'une des sections de protection antiblocage (4a, 4b, 4c) et d'au moins l'une des sections intermédiaires (6a, 6b), et ce dispositif de commande est raccordé à au moins un premier entraînement de réglage et (ou) au moins un deuxième entraînement de réglage d'au moins l'un des supports (14a, 14b, 14c) et (ou) d'au moins un palier (12a, 12b, 12c).

10. Le poste de soutien que décrit la revendication 9, et qui se **caractérise par** un capteur qui permet de déterminer une distance entre la bande de convoyage (10) et une section de protection antiblocage (4a, 4b, 4c) et (ou) une section intermédiaire souple (6a, 6b), et ce capteur est raccordé au dispositif de commande et ce dispositif de commande est programmé pour activer au moins un premier entraînement de réglage et (ou) au moins un deuxième entraînement de réglage, en fonction de la distance qui a été déterminée, en particulier pour programmer une distance spécifiée entre une section de protection antiblocage ou une section intermédiaire et la bande de convoyage (10).

11. Le poste de soutien que décrit la revendication 10, et qui se caractérise le fait qu'au moins un capteur vient s'intégrer à une section de protection antiblocage et (ou) une section intermédiaire.

12. Le poste de soutien que décrit l'une ou l'autre des revendications précédentes, et qui se **caractérise par** un convertisseur d'énergie qui produit un courant électrique du fait de la rotation d'un des rouleaux de soutien (8a, 8b, 8c) pour au moins un premier et (ou) un deuxième palier de réglage et (ou) un capteur.

13. Le système à bande de convoyage avec au moins un poste de soutien, que décrit l'une ou l'autre des revendications précédentes.

14. Le système à bande de convoyage que décrit la revendication 13, et qui se **caractérise par le fait que** plusieurs postes de soutien sont liés les uns aux autres, et si ce n'est que les distances entre la bande de convoyage (10) et les sections de protection antiblocage et (ou) les sections intermédiaires de plusieurs postes de soutien peuvent être programmés en se basant sur une distance, déterminée au niveau d'un poste unique de support, entre la bande de convoyage et une section de protection antiblocage et (ou) une section intermédiaire de ce poste de soutien.

15. Méthode de programmation d'une distance entre une bande de convoyage (10) et une protection antiblocage (2) sur un poste de soutien (1), selon l'une des revendications 1 à 12, avec les étapes suivantes :
a) enregistrement d'une distance entre une section de protection antiblocage (4a, 4b, 4c) et (ou) une section intermédiaire (6a, 6b) de la protection antiblocage (2) et la bande de convoyage (10),
b) comparaison de la distance enregistrée à une distance spécifiée et
c) réglage d'au moins un support (14a, 14b, 14c) et changement de la distance d'au moins une section de protection antiblocage et (ou) d'une section intermédiaire par rapport à la bande de convoyage (10) dans le sens qui se dirige vers la distance spécifiée et (ou) déplacement d'une section de protection antiblocage (4a, 4b, 4c) dans un sens de réglage (V) par rapport à un support (14a, 14b, 14c).
